# EUROPÄISCHE PATENTSCHRIFT

(11) **EP 1 235 442 B1**
(45) Veröffentlichungstag und Bekanntmachung des Hinweises auf die Patenterteilung: **02.11.2006**
(21) Anmeldenummer: 02100116.9
(22) Anmeldetag: 08.02.2002
(51) Int. Cl.: H04Q 3/62

(54) **Verfahren zum Betrieb eines privaten Telekommunikationsnetzes**
Method for operating a private telecommunication network
Méthode de gestion d'un réseau de télécommunication privé

(30) Priorität: 23.02.2001 DE 10108824
(43) Veröffentlichungstag der Anmeldung: 28.08.2002
(73) Patentinhaber: SIEMENS AKTIENGESELLSCHAFT, 80333 München (DE)
(72) Erfinder: Pförtner, Thomas, 85635 Höhenkirchen (DE)

(56) Entgegenhaltungen:
- US-A- 5 432 846
- US-A- 5 841 854
- PATENT ABSTRACTS OF JAPAN vol. 1996, no. 01, 31. Januar 1996 (1996-01-31) & JP 07 250380 A (NEC COMMUN SYST LTD), 26. September 1995 (1995-09-26)
- PATENT ABSTRACTS OF JAPAN vol. 018, no. 635 (E-1638), 5. Dezember 1994 (1994-12-05) & JP 06 245245 A (TOSHIBA CORP), 2. September 1994 (1994-09-02)
- PATENT ABSTRACTS OF JAPAN vol. 1998, no. 03, 27. Februar 1998 (1998-02-27) & JP 09 298597 A (NEC CORP), 18. November 1997 (1997-11-18)

## Beschreibung

Die Erfindung betrifft ein Verfahren zum Betrieb eines privaten Telekommunikationsnetzes nach dem Oberbegriff des Anspruchs 1 sowie ein Telekommunikationssystem.

Die mobile Telekommunikation ist binnen kurzer Zeit zu einem Kommunikationsinstrument mit hohem Verbreitungsgrad geworden, das einerseits den etablierten Telefon-Festnetzen ernsthaft Konkurrenz macht und anderseits (und vor allem) eine sinnvolle Ergänzung zu diesen bildet. Mit zunehmender Netzabdeckung in den Industrieländern kommt der entscheidene Vorteil der praktisch uneingeschränkten Mobilität inzwischen voll zum Tragen. Mobiltelefone sind deshalb auch zu einem festen Bestandteil der Arbeitsausrüstung der Mitarbeiter vieler Firmen, Organisationen und Behörden geworden. Zudem werden Unternehmen und Einrichtungen des gesellschaftlichen und sozialen Lebens mit zunehmender Verbreitung der Mobiltelefone in immer größerem Umfang auch von außen über Mobiltelefone kontaktiert.

In diesem Zusammenhang gewinnt die Gestaltung der Schnittstelle zwischen den Mobilfunknetzen und Firmennetzen (Corporate Networks) bzw. Nebenstellenanlagen zunehmend an Bedeutung. Sie sollte so gestaltet sein, daß Teilnehmer innerhalb der Firma bzw. Einrichtung, also an Endgeräten der Nebenstellenanlage, aus einem Mobilfunknetz ebenso leicht und zuverlässig erreichbar sind wie aus dem Festnetz. Zudem sollten die Verbindungskosten möglichst gering sein.

In dieser Hinsicht gibt es allerdings in verschiedenen Ländern bzw. Telekommunikationssystemen noch erhebliche rechtliche und organisatorische sowie auch bestimmte technische Einschränkungen, die den Zugang zu privaten Netzen aus den Mobilfunknetzen erschweren.

So ist es in bestimmten Ländern (z. B. Südafrika) oder infolge von Beschränkungen in vergebenen Lizenzen unter Umständen nicht zulässig, bei einer Nebenstellenanlage (PBX) zusätzlich zum Zugang in das Festnetz einen weiteren Zugang in ein Mobilfunknetz zu realisieren, um Gespräche zwischen Mobilfunkteilnehmern und Teilnehmern der Nebenstellenanlage ohne Nutzung des Festnetzes durchführen zu können.

Es ist zwar bekannt, über ein an eine Nebenstellenanlage angeschlossenes Mobilfunkterminal bzw. -modul die Nebenstellenanlage an ein Mobilfunknetz anzubinden. Zur Erhöhung der Kapazität der Nebenstellenanlage ist grundsätzlich auch ein mehrkanaliger Anschluss, d. h. der Anschluss mehrerer Mobilfunkmodule mit jeweils einer eigenen Rufnummer, bekannt. Diesbezüglich gibt es aber landesspezifische rechtliche Einschränkungen, z. B. in Deutschland. Zudem kann bei einer solchen Anordnung ein Anrufer aus dem Mobilfunknetz eine freie Einwahlnummer der Nebenstellenanlage nur durch Probieren herausfinden, sofern er bei einem ersten Einwahlversuch auf eine belegte Rufnummer stößt. Dies stellt natürlich eine ernsthafte Einschränkung des Gebrauchswertes einer solchen Nebenstellenanlage dar.

Aus der US 5,432,846 ist eine Telefonvermittlungsstelle bekannt, die eingehende Rufe automatisch auf freie Endgeräte verteilt. Aus einer Gruppe von bestimmten Endgeräten, welche einer Directory Number DN angehören, wird ein eingehender Ruf an das erste freie Endgerät vermittelt. Sind alle passenden Endgeräte belegt, so wird der Ruf gehalten, bis wieder ein Endgerät erreichbar ist.
Auch die JP 09298597 beschreibt ein Warteschlangenproblem in einer Agent Group eines Call Center.
Einen "Hunting" Mechanismus kann man der US 5,841,854 entnehmen. Das bedeutet, dass ein geeigneter Agent aus einer Gruppe von Agents adressiert wird, der sich in verschiedenen Netzen aufhalten kann.

Der Erfindung liegt daher die Aufgabe zugrunde, ein verbessertes Verfahren der gattungsgemäßen Art, welches die leichte, zuverlässige und kostengünstige Einwahl in ein Firmennetz aus einem Mobilfunknetz ermöglicht, sowie ein Telekommunikationssystem anzugeben, mit dem dieses Verfahren ausführbar ist.

Diese Aufgabe wird in ihrem Verfahrensaspekt durch ein Verfahren mit den Merkmalen des Anspruchs 1 und in ihren Vorrichtungsaspekten durch ein Telekommunikationssystem mit den Merkmalen des Anspruchs 6 gelöst.

Die Erfindung schließt den wesentlichen Gedanken ein, einer Nebenstellenanlage bzw. vergleichbaren Einrichtung zur direkten mehrkanaligen Funkanbindung an ein Mobilfunknetz eine allen Kanälen gemeinsame virtuelle Rufnummer zuzuordnen. Dieser Gedanke ermöglicht eine gemeinsame Verwaltung der realen Rufnummern der Mobilfunkkanäle der Nebenstellenanlage bzw. vergleichbaren Einrichtung und somit die automatische Auswahl eines freien Kanals zum Durchstellen eines kommenden Rufes an ein Endgerät der Anlage.

Seitens des privaten Netzes kann statt einer Nebenstellenanlage auch eine Mehrzahl von Nebenstellenanlagen oder einzelne Anschlüsse vorgesehen sein, die unter einer virtuellen Rufnummer erreichbar sein sollen (eine sogenannte "Team-Nummer"). Darüber hinaus eignet sich das Verfahren auch für eine Sprachübertragung über ein IP-Netz (VoIP = Voice over IP). An die Stelle einer Nebenstellenanlage tritt dann auf der privaten Seite ein Call-Server oder ein VoIP-Gateway oder eine vergleichbare Instanz.

Dieser Gedanke ist auch für die Anbindung einer Nebenstellenanlage bzw. vergleichbaren Einrichtung an das Festnetz tragfähig - wobei hier natürlich bei der Nebenstellenanlage nicht mehrere Mobilfunkmodule, sondern mehrere reale Anschlüsse und Rufnummern unter der "Oberfläche" einer gemeinsamen virtuellen Rufnummer vorgesehen sind. Dieser erweiterte, die Festnetzanbindung einschließende Grundgedanke der Erfindung ermöglicht eine Steuerung des Zugriffes auf Firmennetze (Call Center o. ä.) aus dem Festnetz nicht nur - wie bisher bekannt und praktiziert - in Abhängigkeit vom (geografischen) Ausgangspunkt und/oder der Uhrzeit des Rufes, sondern in Abhängigkeit vom Belegtzustand der einzelnen realen externen Anschlüsse bzw. Rufnummern dieses Netzes. Hiermit läßt sich eine bessere Auslastung und gegenüber bisher praktizierten Lösungen der Umleitung von eingehenden Rufen über das öffentliche Netz auch eine Kosteneinsparung erzielen.

In einer bevorzugten Ausgestaltung der vorgeschlagenen Lösung wird in Reaktion auf die Feststellung, daß sämtliche realen Rufnummern belegt sind, eine Warteschlange kommender Rufe gebildet und der Ruf über die nächste freiwerdende reale Rufnummer zur gewünschten Durchwahl durchgestellt. In einer weiteren Ausgestaltung kann dem Anrufer hierbei (in an sich bekannter Weise) eine Nachricht oder Pausenmusik o. ä. zur Überbrückung der Wartezeit angeboten werden.

Die Realisierung der vorgeschlagenen Funktionalität erfolgt bevorzugt durch eine intelligente Instanz im öffentlichen Netz, die insbesondere einem dortigen Dienstverwaltungs-/Dienststeuerknoten zugeordnet ist. Die Realisierung wird normalerweise im wesentlichen softwaremäßig erfolgen, wobei unter Vorrichtungsaspekten Erfassungsmittel zur Erfassung des Belegungszustandes der realen Anschlüsse bzw. Rufnummern und eingangsseitig mit diesen verbundene Schalt- bzw. Steuermittel zur Auswahl einer freien realen Rufnummer und zum Durchstellen des Anrufes über diese an das gewünschte interne Endgerät vorgesehen sind.

In einer zusätzlich vorteilhaften Ausführung des Verfahrens wird bei von der privaten Seite (aus der Nebenstellenanlage, von einem der einzelnen Anschlüsse oder von dem Call-Server oder VoIP-Gateway) abgehenden Rufen statt der realen Nummer des rufenden Teilnehmers eine andere Rufnummer signalisiert - insbesondere die gemeinsame virtuelle Rufnummer. Diese kann in einer speziellen Fortbildung dieser Variante um die Durchwahlnummer des rufenden Teilnehmers ergänzt sein.

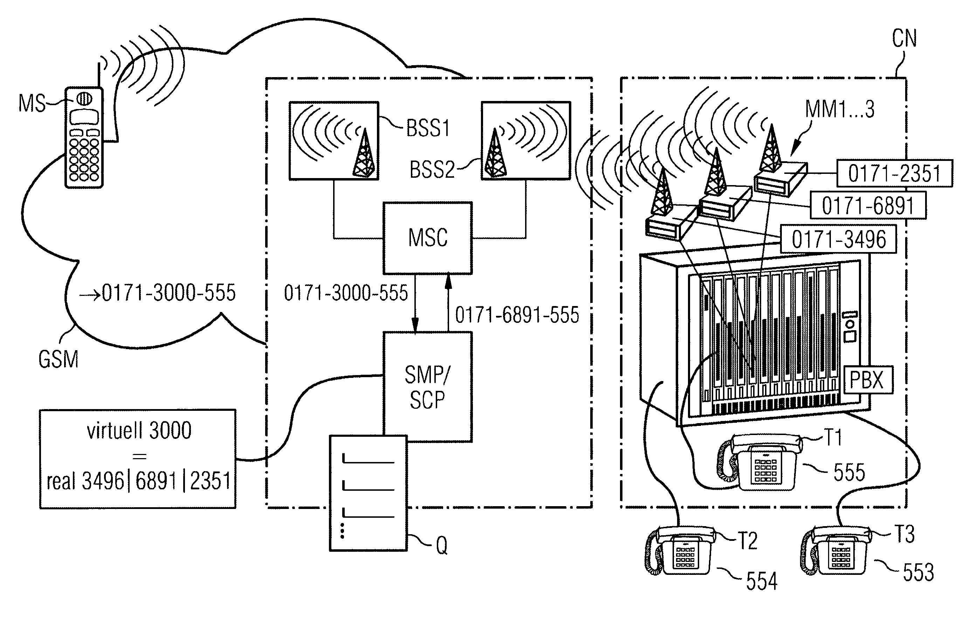

Vorteile und Zweckmäßigkeiten der Erfindung ergeben sich im übrigen aus den Unteransprüchen sowie der nachfolgenden kurzen Beschreibung eines bevorzugten Ausführungsbeispiels anhand der einzigen Figur.

Diese zeigt in einer schematischen Darstellung ein Beispiel eines Telekommunikationssystem der vorgeschlagenen Art mit einem Mobilfunknetz GSM und einem über Funk direkt an dieses angebundenen Firmennetz CN. Von beiden Netzen GSM, CN sind - da deren Aufbau dem Fachmann bekannt ist und keiner näheren Erläuterung bedarf - nur die im Zusammenhang mit der Ausführung der Erfindung wesentlichen Komponenten dargestellt.

Es handelt sich hierbei im Mobilfunknetz GSM um ein Mobiltelefon MS, welches über eine erste Basisstation BSS1 mit einer Mobilvermittlungsstelle MSC verbunden ist. Diese steht im Daten- und Steuersignalaustausch mit einem Dienstverwaltungs-/Dienststeuerknoten SMP/SCP des Mobilfunknetzes, wo eine Zuordnung zwischen einer virtuellen Rufnummer und einer Mehrzahl realer Rufnummern einer Nebenstellenanlage PBX des Firmennetzes CN tabellarisch gespeichert ist. Weiterhin steht die Mobilvermittlungsstelle MSC mit einer weiteren Basisstation BSS2 in Verbindung, über die das Mobilfunknetz GSM drahtlos mit dem Firmennetz CN verbunden ist.

Seitens des Firmennetzes CN wird diese Verbindung im dargestellten Beispiel durch drei Mobilfunkmodule MM1 bis MM3 hergestellt, denen jeweils eine reale Rufnummer zugeordnet ist. Im Beispiel handelt es sich um die Rufnummern 0171-2351, 0171-6891 und 0171-3496. Die Mobilfunkmodule MM1 bis MM3 sind in an sich bekannter Weise mit Eingangsstufen der Nebenstellenanlage PBX verbunden, und an diese sind mehrere (im Beispiel drei) interne Endgeräte T1 bis T3 mit den Durchwahlnummern 553, 554 und 555 angeschlossen. Nach extern hat die Nebenstellenanlage eine allen realen Kanälen gemeinsame virtuelle Rufnummer, im Beispiel die Nummer 3000.

Wenn ein Mobilfunkteilnehmer vom Mobiltelefon MS aus das Firmennetz CN erreichen will, wählt er aufeinanderfolgend die Netzvorwahl, die virtuelle Rufnummer der Nebenstellenanlage und die Durchwahl, im Beispiel also die Nummer 0171-3000-555. Der bei der Mobilvermittlungsstelle MSC ankommende Ruf wird anhand der Zuordnungstabelle im Dienstverwaltungs-/Dienststeuerknoten SMP/SCP (beispielsweise) in einen an die reale Rufnummer 0171-6891-555 gerichteten Ruf "umgedeutet" und über die Mobilvermittlungsstelle MSC in dieser Form an die zweite Basisstation BSS2 weitergegeben. Erweist sich der reale Anschluß 6891 der Nebenstellenanlage PBX als belegt, so wird dies dem Dienstverwaltungs-/Dienststeuerknoten SMP/SCP signalisiert, und dieser stellt eine zweite der virtuellen Rufnummer 3000 zugeordnete reale Rufnummer zur Weiterleitung des Rufes über einen zweiten Kanal bereit. Ist auch dieser belegt, so wird im vorliegenden Beispiel mit der dritten verfügbaren realen Rufnummer ein dritter Versuch gestartet. Ist auch der dritte Anschluß bzw. das dritte der Mobilfunkmodule MM1 bis MM3 belegt, so wird der Ruf in einer Warteschlangeneinrichtung Q eingetragen, der Anrufer entsprechend informiert und sein Anruf bei Freiwerden eines der drei Kanäle über diesen zum gewünschten Endgerät T1 mit der Durchwahl 555 durchgestellt.

Die Ausführung der Erfindung ist nicht auf dieses Beispiel beschränkt, sondern ebenso in einer Vielzahl von Abwandlungen möglich, die im Rahmen fachgemäßen Handelns liegen. Insbesondere kann die Erfindung - wie oben bereits angemerkt - auch bei einem an ein Telefon-Festnetz angeschlossenen Firmennetz oder anderen privaten Netz ausgeführt werden. An die Stelle des Dienstverwaltungs-/Dienststeuerknotens SMP/SCP des Mobilfunknetzes GSM tritt dann bezüglich der Verwaltung der virtuellen Rufnummer und der Steuerung eines kommenden Rufes über eine freie reale Rufnummer eine entsprechende Funktionseinheit (Server) des Festnetzes. Es sei auch darauf hingewiesen, daß die Erfindung grundsätzlich auch ohne Etablierung einer Warteschlange realisierbar ist.

## Patentansprüche

1. Verfahren zum Betrieb eines privaten Telekommunikationsnetzes (CN), das über mindestens eine mehrkanalige Nebenstellenanlage (PBX) oder eine vergleichbare Einrichtung, insbesondere einen Call-Server oder ein Voice-over-IP-Gateway angeschlossen ist, zur Herstellung einer Telekommunikationsverbindung zwischen einem an das öffentliche Netz (GSM) angeschlossenen externen Endgerät (MS) und mehreren an das private Netz (CN) angeschlossenen internen Endgeräten (T1, T2, T3) mit jeweils einer Durchwahlnummer (553, 554, 555), wobei der Nebenstellenanlage (PBX) für eine Mehrzahl realer Rufnummern (0171-2351, 0171-6891, 0171-3496) eine gemeinsame virtuelle Rufnummer (0171-3000) zum Zugang aus dem öffentlichen Netz zugeordnet ist,
**dadurch gekennzeichnet, dass**
die mehrkanalige Nebenstellenanlage (PBX) mit mehreren realen Rufnummern (0171-2351, 0171-6891, 0171-3496) an ein öffentliches Telekommunikationsnetz (GSM) angeschlossen ist
und
bei Anwahl einer virtuellen Rufnummer (0171-3000-500) von dem externen Endgerät (MS) aus innerhalb des öffentlichen Netzes (GSM) der Belegt- bzw. Frei-Zustand der realen Rufnummern (0171-2351, 0171-6891, 0171-3496) erfaßt wird und der Anruf über eine freie reale Rufnummer zum internen Endgerät (T1) der angewählten Durchwahlnummer (555) durchgestellt wird.

2. Verfahren nach Anspruch 1,
**dadurch gekennzeichnet, daß**
im Ansprechen auf die Erfassung des Belegt-Zustandes sämtlicher realen Rufnummern eine Warteschlange (Q) gebildet und der Anruf über die nächste freiwerdende reale Rufnummer durchgestellt wird.

3. Verfahren nach Anspruch 1 oder 2,
**dadurch gekennzeichnet, daß**
das öffentliche Netz als Mobilfunknetz (GSM) und das externe Endgerät als Mobilfunk-Endgerät (MS) ausgebildet ist und der Zugang zu der Nebenstellenanlage (PBX) bzw. vergleichbaren Einrichtung über eine Funkstrecke zu Mobilfunkmodulen (MM1 bis MM3) der Nebenstellenanlage hergestellt wird.

4. Verfahren nach einem der vorangehenden Ansprüche,
**dadurch gekennzeichnet, daß**
das Durchstellen durch eine intelligente Instanz im öffentlichen Netz gesteuert wird.

5. Verfahren nach Anspruch 4,
**dadurch gekennzeichnet, daß**
die intelligente Instanz einem Dienstverwaltungs /Dienststeuerknoten (SMP/SCP) des öffentlichen Netzes, insbesondere Mobilfunknetzes (GSM), zugeordnet ist.

6. Verfahren nach einem der vorangehenden Ansprüche,
**dadurch gekennzeichnet, daß**
bei abgehenden Rufen aus der Nebenstellenanlage (PBX) oder vergleichbaren Einrichtung eine andere als die reale Rufnummer des rufenden Teilnehmers, insbesondere die gemeinsame virtuelle Rufnummer, wahlweise ergänzt um die Durchwahlnummer, signalisiert wird.

7. Telekommunikationssystem mit einem öffentlichen Telekommunikationsnetz (GSM) und einem über eine mehrkanalige Nebenstellenanlage (PBX) oder eine vergleichbare Einrichtung, insbesondere einen Call-Server oder ein Voice-over-IP-Gateway an dieses angeschlossenen privaten Telekommunikationsnetz (CN), bei dem einer Mehrzahl von realen Rufnummern (0171-2351, 0171-6891, 0171-3496) der Nebenstellenanlage (PBX) eine gemeinsame virtuelle Rufnummer (0171-3000) zugeordnet ist
**dadurch gekennzeichnet, dass**
die mehrkanalige Nebenstellenanlage (PBX) mit mehreren realen Rufnummern (0171-2351, 0171-6891, 0171-3496) an das öffentliche Telekommunikationsnetz (GSM) angeschlossenen ist und im öffentlichen Netz (GSM) Erfassungsmittel (SCP) zur Erkennung des Belegt- bzw. Frei-Zustandes der der virtuellen Rufnummer (0171-3000) zugeordneten realen Rufnummern (0171-2351, 0171-6891, 0171-3496) und den Erfassungsmitteln nachgeschaltete Schaltmittel (MSC) zum Durchstellen eines von einem externen Endgerät (MS) innerhalb des öffentlichen Netzes (GSM) auf eine virtuelle Rufnummer (0171-3000-555) kommenden Rufes über eine als frei erkannte reale Rufnummer zu einem internen Endgerät (T1) der im kommenden Ruf ausgewählten Durchwahlnummer (555) vorgesehen sind.

8. Telekommunikationssystem nach Anspruch 7,
**dadurch gekennzeichnet, daß**
die Erfassungsmittel und Schaltmittel durch eine intelligente Instanz implementiert sind, welche einem Dienstverwaltungs-/Dienststeuerknoten (SMP/SCP) des öffentlichen Netzes zugeordnet ist.

9. Telekommunikationssystem nach Anspruch 7 oder 8,
**dadurch gekennzeichnet, daß**
das öffentliche Netz als Mobilfunknetz (GSM) und das externe Endgerät als Mobilfunk-Endgerät (MS) ausgebildet ist und der Zugang zu der Nebenstellenanlage (PBX) bzw. vergleichbaren Einrichtung über eine Funkstrecke zu Mobilfunkmodulen (MM1 bis MM3) der Nebenstellenanlage realisiert ist.

10. Telekommunikationssystem nach einem der Ansprüche 7 bis 9,
**dadurch gekennzeichnet, daß**
den Schaltmitteln eine Warteschlangeneinrichtung (Q) zur Bildung einer Warteschlange im Ansprechen auf die Erfassung des Belegt-Zustandes aller realen Rufnummern zum Durchschalten kommender Rufe über die nächste freiwerdende reale Rufnummer in der Reihenfolge ihres Einganges vorgesehen ist.

## Claims

1. Method for operating a private telecommunications network (CN) which is connected via at least one multichannel private branch exchange (PBX) or a comparable device, in particular a call server or a voice-over IP Gateway, in order to establish a telecommunications link between an external terminal (MS) which is connected to the public network (GSM) and a plurality of internal terminals (T1, T2, T3) which are connected to the private network (CN) and each have a direct dialing number (553, 554, 555), the private branch exchange (PBX) for a multiplicity of real call numbers (0171-2351, 0171-6891, 0171-3496) being assigned a common virtual call number (0171-3000) for access from the public network, **characterized in that** the multichannel private branch exchange (PBX) with a plurality of real call numbers (0171-2351, 0171-6891, 0171-3496) is connected to a public telecommunications network (GSM), and the busy or not-in-use state of the real call numbers (0171-2351, 0171-6891, 0171-3496) is registered from within the public network (GSM) when a virtual call number (0171-3000-500) is dialed by the external terminal (MS), and the call is switched through to the internal terminal (T1) of the dialed direct dialing number (555) by means of a free real call number.

2. Method according to Claim 1, **characterized in that** in response to the registration of the busy state of all the real numbers, a queue (Q) is formed and the call is switched through via the next real call number to become free.

3. Method according to Claim 1 or 2, **characterized in that** the public network is embodied as a mobile radio network (GSM) and the external terminal is embodied as a mobile telephone terminal (MS), and the access to the private branch exchange (PBX) or comparable device is established via a radio link to mobile telephone modules (MM1 to MM3) of the private branch exchange.

4. Method according to one of the preceding claims, **characterized in that** the switching through is controlled by an intelligent entity in the public network.

5. Method according to Claim 4, **characterized in that** the intelligent entity is assigned to a service management/service control point (SMP/SCP) of the public network, in particular a mobile telephone network (GSM).

6. Method according to one of the preceding claims, **characterized in that**, in the case of outgoing calls from the private branch exchange (PBX) or comparable device, a call number other than the real call number of the calling subscriber, in particular the common virtual call number, is signaled, optionally supplemented with the direct dialing number.

7. Telecommunications system with a public telecommunications network (GSM) and a private telecommunications network (CN) which is connected to the latter via a multichannel private branch exchange (PBX) or a comparable device, in particular a call server or a voice-over IP Gateway, in which a multiplicity of real call numbers (0171-2351, 0171-6891, 0171-3496) of the private branch exchange (PBX) is assigned one common virtual call number (0171-3000), **characterized in that** the multichannel private branch exchange (PBX) with a plurality of real call numbers (0171-2351, 0171-6891, 0171-3496) is connected to the public telecommunications network (GSM), and registration means (SCP) for detecting the busy or not-in-use state of the real call numbers (0171-2351, 0171-6891, 0171-3496) assigned to the virtual call number (0171-3000) and a switching means (MSC) connected downstream of the registration means for switching through a call, directed to a virtual call number (0171-3000-555) by an external terminal (MS) within the public network (GSM), via a real call number which is detected as being free, to an internal terminal (T1) of the direct dialing number (555) selected in the incoming call, are provided in the public network (GSM).

8. Telecommunications system according to Claim 7, **characterized in that** the registration means and switching means are implemented by an intelligent entity which is assigned to a service administration/service control point (SMP/SCP) of the public network.

9. Telecommunications system according to Claim 7 or 8, **characterized in that** the public network is embodied as a mobile telephone network (GSM) and the external terminal is embodied as a mobile telephone terminal (MS) and the access to the private branch exchange (PBX) or comparable device is implemented via a radio link to mobile telephone modules (MM1 to MM3) of the private branch exchange.

10. Telecommunications system according to one of Claims 7 to 9, **characterized in that** the switching means are provided with a queue device (Q) for forming a queue in response to the registration of the busy state of all the real call numbers in order to switch through incoming calls via the next real call number to become free, in the order in which they are received.

## Revendications

1. Procédé d'exploitation d'un réseau de télécommunication privé (CN) qui est raccordé par l'intermédiaire d'au moins un poste supplémentaire à plusieurs voies (PBX) ou d'un dispositif comparable, notamment un Call-Server ou un Voice-over-IP-Gateway, pour établir une liaison de communication entre un terminal externe (MS) raccordé au réseau public (GSM) et plusieurs terminaux internes (T1, T2, T3) raccordés au réseau privé (CN) au moyen de respectivement un numéro de sélection directe (553, 554, 555), un numéro d'appel virtuel commun (0171-3000) étant attribué au poste supplémentaire (PBX) pour une pluralité de numéros d'appel réels (0171-2351, 0171-6891, 0171-3496) pour l'accès à partir du réseau public,
**caractérisé en ce que**
Le poste supplémentaire (PBX) à plusieurs voies est raccordé à un réseau de télécommunication public (GSM) au moyen de plusieurs numéros d'appel réels (0171-2351, 0171-6891, 0171-3496) et
**en ce que**, lors de la sélection d'un numéro d'appel virtuel (0171-3000-500) par le terminal externe (MS) à partir du réseau public (GSM), l'état occupé resp. libre du numéro d'appel réel (0171-2351, 0171-6891, 0171-3496) est détecté et l'appel est transféré au terminal interne (T1) du numéro direct sélectionné (555) par l'intermédiaire d'un numéro d'appel réel libre.

2. Procédé selon la revendication 1,
**caractérisé en ce qu'**
en réponse à la détection de l'état occupé de tous les numéros d'appels réels, une file d'attente (Q) est formée et l'appel est transmis par l'intermédiaire du numéro d'appel réel suivant devenant libre.

3. Procédé selon la revendication 1 ou 2,
**caractérisé en ce que**
le réseau public est exécuté comme réseau de radiotéléphonie mobile (GSM) et le terminal externe comme terminal de radiotéléphonie mobile (MS) et **en ce que** l'accès au poste supplémentaire (PBX) resp. au dispositif comparable est établi par l'intermédiaire d'une liaison radio vers des modules de radiotéléphonie mobile (MM1 à MM3) du poste supplémentaire.

4. Procédé selon l'une quelconque des revendications précédentes,
**caractérisé en ce que**
le transfert est commandé dans le réseau public par une instance intelligente.

5. Procédé selon la revendication 4,
**caractérisé en ce que**
l'instance intelligente est affectée à un noeud de gestion de service/noeud de commande de service (SMP/SCP) du réseau public, notamment du réseau de radiotéléphonie mobile (GSM).

6. Procédé selon l'une quelconque des revendications précédentes,
**caractérisé en ce qu'**
en cas d'appels sortant du poste supplémentaire (PBX) ou du dispositif comparable, un numéro d'appel autre que le numéro d'appel réel de l'abonné appelant, notamment le numéro d'appel virtuel commun, complété facultativement du numéro de sélection directe, est signalé.

7. Système de télécommunication comprenant un réseau de télécommunication public (GSM) et un réseau de télécommunication privé (CN) raccordé à celui-là par l'intermédiaire d'un poste supplémentaire (PBX) à voies multiples ou d'un dispositif comparable, notamment un Call-Server ou un Voice-over-IP-Gateway, dans lequel un numéro d'appel virtuel commun (0171-3000) est attribué à une pluralité de numéros d'appels réels (0171-2351, 0171-6891, 0171-3496) du poste supplémentaire (PBX),
**caractérisé en ce que**
le poste supplémentaire (PBX) à plusieurs voies est raccordé au réseau de télécommunication public (GSM) au moyen de plusieurs numéros d'appels réels (0171-2351, 0171-6891, 0171-3496) et **en ce que** des moyens de détection (SCP) sont prévus dans le réseau public (GSM) pour identifier l'état occupé resp. l'état libre des numéros d'appels réels (0171-2351, 0171-6891, 0171-3496) attribués au numéro d'appel virtuel (0171-3000) et des moyens de commutation (MSC) installés en aval des moyens de détection sont prévus pour transférer, sur un numéro d'appel virtuel (0171-3000-555), un appel arrivant depuis un terminal externe (MS) situé à l'intérieur du réseau public (GSM), par l'intermédiaire d'un numéro d'appel identifié libre, à un terminal interne (T1) du numéro direct sélectionné (555) dans l'appel arrivant.

8. Système de télécommunication selon la revendication 7,
**caractérisé en ce que**
les moyens de détection et les moyens de commutation sont réalisés par une instance intelligente, laquelle est affectée à un noeud de gestion de service/noeud de commande de service (SMP/SCP) du réseau public.

9. Système de télécommunication selon la revendication 7 ou 8,
**caractérisé en ce que**
le réseau public est exécuté comme réseau de radiotéléphonie mobile (GSM) et le terminal externe comme terminal de radiotéléphonie mobile (MS) et **en ce que** l'accès au poste supplémentaire (PBX) resp. au dispositif comparable est réalisé par l'intermédiaire d'une liaison radio vers des modules de radiotéléphonie mobile (MM1 à MM3) du poste supplémentaire.

10. Système de télécommunication selon l'une quelconque des revendications 7 à 9,
**caractérisé en ce qu'**
un dispositif de file d'attente (Q), destiné à former une file d'attente en réponse à la détection de l'état occupé de tous les numéros d'appel réels, est prévu pour les moyens de commutation afin de transférer les appels arrivant par l'intermédiaire du numéro d'appel suivant devenant libre dans l'ordre de leur arrivée.
